# EUROPEAN PATENT SPECIFICATION

(11) **EP 2 956 849 B1**
(45) Date of publication and mention of the grant of the patent: **31.10.2018**
(21) Application number: 13713537.2
(22) Date of filing: 13.02.2013
(51) Int. Cl.: G06F 3/0488, G06F 1/16

(54) **AN APPARATUS COMPRISING USER INTERFACE PORTION**
APPARATUS MIT BENUTZERSCHNITTSTELLENTEIL
APPAREIL AVEC PORTION D'INTERFACE UTILISATEUR

(43) Date of publication of application: 23.12.2015
(73) Proprietor: Nokia Technologies Oy, 02610 Espoo (FI)
(72) Inventor: NURMI, Juha, 24100 Salo (FI)
(74) Representative: Swindell & Pearson Limited
(86) International application number: PCT/IB2013/051172
(87) International publication number: WO 2014/125329

(56) References cited:
- WO-A1-01/35173
- WO-A1-96/21888
- WO-A1-2012/009335
- KENT LYONS ET AL: "Facet: A Multi-Segment Wrist Worn System", UIST '12,PROCEEDINGS OF THE ANNUAL ACM SYMPOSIUM ON USER INTERFACE SOFTWARE AND TECHNOLOGY, CAMBRIDGE, MASSACHUSETTS, USA, 7 October 2012 (2012-10-07), pages 123-129, XP002703648, ISBN: 978-1-4503-1580-7

## Description

### TECHNOLOGICAL FIELD

Embodiments of the present invention relate to an apparatus comprising user interface portions. In particular, they relate to an apparatus comprising display and/or user actuable portions.

### BACKGROUND

Electronic devices comprising user interface portions are known. A user interface portion may comprise, for example, a display portion and/or a user actuable portion. The display portion may comprise means which enables information to be displayed. The user actuable portion may comprise a portion which enables a user to control an electronic device and/or input information into the electronic device. The user actuable portion may comprise, for example, a touch screen or touch pad or any other suitable actuable portion.

WO 01/35173 A1 discloses a flexible wrist watch comprising a flexible film with printed circuits and multiple display portions.

### BRIEF SUMMARY

The present invention provides an apparatus according to claim 1. Further aspects of the invention are outlined in the dependent claims.

Embodiments which do not fall within the scope of the claims do not describe part of the present invention.

According to various, but not necessarily all, examples of the disclosure there may be provided an apparatus comprising; an active region comprising a plurality of user interface portions; at least one inactive region comprising a plurality of traces configured to connect the user interface portions to electronic components; wherein the at least one inactive region is provided on at least one projection at an edge of the active region wherein the at least one active region is configured to extend over at least one projection.

In some examples the active region may be configured so that a first edge of the active region can be positioned adjacent to a second edge of the active region.

In some examples the active region may be configured so that an edge of the active region can be positioned adjacent to an edge of an active region of another apparatus.

In some examples the user interface portion may comprise at least one display portion.

In some examples the user interface portion may comprise at least one portion which is configured to be actuated by a user. The portion which is configured to be actuated by a user may comprise a touch sensitive portion.

In some examples the apparatus may be flexible.

In some examples the active region may be configured to form at least a portion of the outer surface of a casing of an electronic device.

In some examples the inactive region may be configured to be positioned inside the casing of an electronic device.

In some examples the thickness of the apparatus may be reduced close to an edge of the apparatus.

In some examples the projection does not extend along all of the edge of the active region.

In some examples a plurality of projections may be provided on one edge of the active region.

In some examples a plurality of projections may be provided on a plurality of edges of the active region.

In some examples the plurality of projections may be spaced from each other.

In some examples the plurality of traces may be arranged parallel to each other.

The apparatus may be for enabling a user to interact with an electronic device. The electronic device may be, for example, a wireless communications device.

### BRIEF DESCRIPTION

For a better understanding of various examples that are useful for understanding the detailed description, reference will now be made by way of example only to the accompanying drawings in which:
Fig. 1 represents an electronic device;
Fig. 2 represents a display driver of an electronic device;
Fig. 3 represents a display panel of an electronic device;
Figs. 4A to 4C represent an apparatus;
Fig. 5 represents another apparatus;
Fig. 6 represents another apparatus; and
Fig. 7 represents another apparatus.

### DETAILED DESCRIPTION

The Figures illustrate an apparatus 101 comprising; an active region 103 comprising a plurality of user interface portions; at least one inactive region 105 comprising a plurality of traces 109 configured to connect the user interface portions to electronic components; wherein the at least one inactive region 105 is provided on at least one projection 113 at an edge of the active region 103 wherein the at least one active region 103 is configured to extend over at least one projection 113.

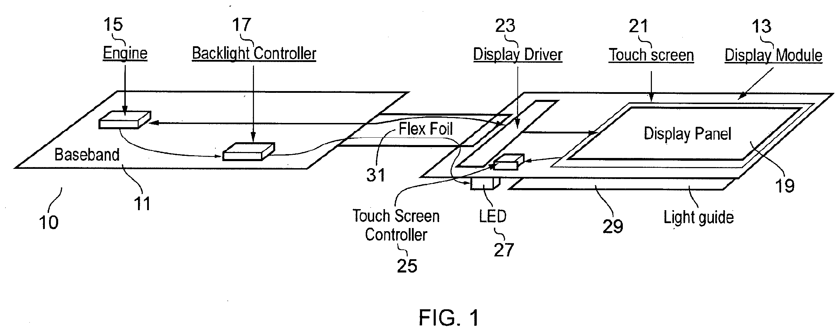

Figure 1 illustrates an example electronic device 10 according to examples of the disclosure. The electronic device 10 may be, for example, a mobile cellular telephone, a personal computer, a camera, a gaming device, a personal digital assistant, a personal music player, a tablet computer or any other electronic device 10 which may comprise a user interface portion. The electronic device 10 may be a handheld electronic device 10 which can be carried in a user's hand, handbag or pocket of their clothing for example.

The example electronic device 10 comprises a baseband 11 and a display module 13. Only features referred to in the following description are illustrated in Fig. 1. However, it should be understood that the electronic device 10 and the respective components may comprise additional features that are not illustrated.

The baseband 11 comprises components which control the electronic device 10. In the illustrated example the baseband 11 comprises an engine controller 15 and a back light controller 17. The engine controller 15 may be configured to control the general functions of the electronic device 10. The backlight controller 17 may be configured to control the back light of the display module 13. The engine controller 15 may be configured to provide a control signal to the backlight controller 17. The engine controller 15 may be configured to control the backlight controller 17.

The controllers 15, 17 may comprise at least one processor and at least one memory. In other examples, other electronic and/or control components may also be provided on the base band 11.

In the example of Fig. 1 a flex foil 31 connects the base band 11 to the display module 13. The flex foil 31 may comprise a multipoint connection which may enable control signals to be exchanged between the baseband 11 and the display module 13.

The display module 13 comprises a display panel 19 and a display driver 23. The display panel 19 may comprise a plurality of pixels which may be configured to display data. The display panel 19 may comprise, for example, a liquid crystal display. Other types of display may be used in other examples of the disclosure.

The display driver 23 may be configured to control the display panel 19. For example the display driver 23 may control the information which is displayed on the display panel 19 and the timings of the pixels of the display panel 19.

The engine controller 15 may be configured to provide a control signal to the display driver 23 to control the information which is displayed by the display panel 19. The control signal may be provided via the multipoint connection.

In the example of Fig. 1 the display module 13 also comprises a touch screen 21. The touch screen 21 may comprise a user actuable portion which may be configured to enable a user to input information to the electronic device 10 or control the electronic device 10. The touch screen 21 may be configured to be actuated by a user touching the touch screen 21 with an object such as their finger or a stylus. In some examples the touch screen 21 may be configured to enable a user to actuate the touch screen 21 by bringing an object such as their finger or stylus close to the surface of the touch screen 21.

The display module 13 may also comprise a touch screen controller 25 which may be configured to control the touch screen 21. The engine controller 15 may be configured to provide a control signal to the touch screen controller 25 to control the touch screen controller 25. The control signal may be provided via the multipoint connection.

The touch screen controller 25 may be configured to detect when the touch screen 21 has been actuated and provide an indication of the actuation to the engine controller 15. The touch screen controller 25 may comprise one or more buffers or other memories.

The touch screen 21 may comprise a resistive, optical or capacitive touch screen 21 or any other suitable type of touch screen 21. In some examples the touch screen 21 and display panel 19 may be separate components. In other examples the touch screen 21 and the display panel 19 may be integrated into a single component.

The display module 13 may also comprise a light source 27. In the example of Fig. 1 the light source 27 comprises a light emitting diode (LED). Other light sources 27 may be used in other examples. The light source 27 may be configured to provide a back light to the display panel 19.

The light source 27 may be configured to be controlled by the back light controller 17 on the baseband 11. The control signal may be provided from the back light controller 17 to the light source 27 via the multipoint connection.

In the example of Fig. 1 a light guide 29 is provided between the light source 27 and display panel 19. The light guide 29 may be configured to direct the light emitted by the light source 27 towards the display panel 19.

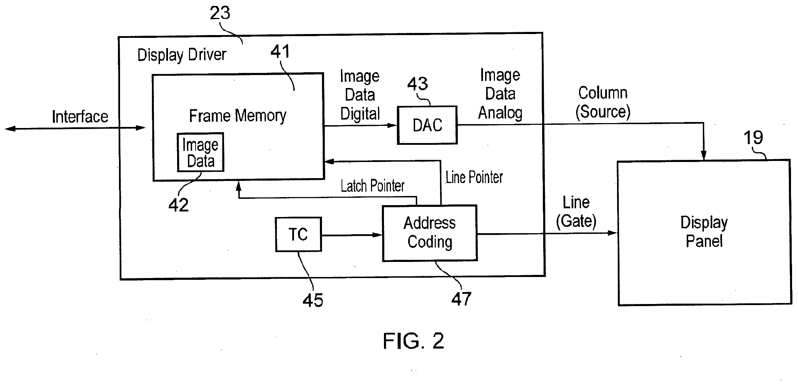

An example of a display driver 23 is illustrated in more detail in Fig. 2. The example display driver 23 comprises a frame memory 41, a digital to analogue converter (DAC) 43, a timing controller (TC) 45 and an address coding block 47.

The frame memory 41 may be configured to store image data. The image data 42 may be received from the engine controller 15 via the flex foil 31 interface. The image data 42 may be stored in the frame memory 41 as digital values, for example, digital grey scale values.

The frame memory 41 may be configured to provide the digital image data 42 to the DAC 43. The DAC 43 may be configured to convert the digital image data 42 to an analogue signal and provide the analogue signal to the source lines of the display panel 19.

The timing controller 45 may be configured to send timing information to the address coding block 47. The address coding block 47 may be configured to provide control signals to the frame memory 41 and display panel 19. The control signal provided by the address coding block 47 to the frame memory 41 controls which location is read from in the frame memory 41 and inputted to the display panel 19 via the DAC 43. The control signal provided by the address coding block 47 to the display panel 19 controls the location of the image data 42 on the display panel 19.

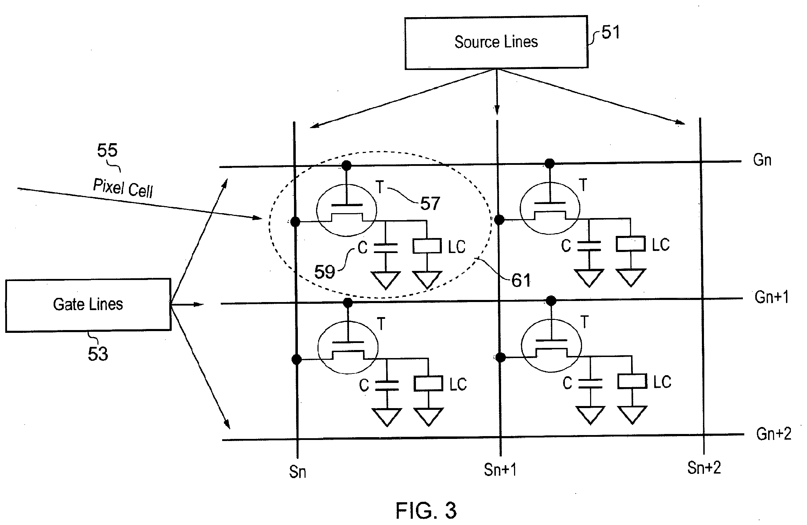

Fig. 3 illustrates an example of a display panel 19 in more detail. The display panel 19 comprises a plurality of source lines 51 and a plurality of gate lines 53. It is to be appreciated that only a portion of the source lines 51 and gate lines 53 are illustrated in Fig. 3 and that the display panel 19 may comprise any suitable number of source lines 51 and gate lines 53. In the particular example of Fig. 3 the source lines 51 extend in columns in a vertical direction and the gate lines 53 extend in lines in a horizontal direction. The gate lines 53 and source lines 51 may comprise conductive traces.

The analogue image data 42 is outputted on the source lines 51. The address coding block 47 provides the control signal to select the gate lines 53 sequentially. When a gate line 53 is selected this closes a switch 57 in the pixel cell 55. In the illustrated example the switch 57 in the pixel cell 55 comprises a transistor. The switches 57 of the non-selected gate lines 53 are kept open. When the switch 57 is closed the analogue image data can flow through the switch 57 and load in the memory 59 of the pixel cell 53. In the illustrated example the memory 59 comprises a capacitor. The loading of the memory 59 will continue until a new gate line 53 is selected. The loading of the image data signal in the memory 59 controls the liquid crystal cell 61 of the pixel cell 55. The loaded memory 59 may be configured to retain the value of the image signal until the same gate line 53 is selected again and new image data is loaded.

The display driver 23 and the conductive traces, such as the source lines 51 and gate lines 53, are used to enable the display panel 19 to provide user interface portions. However the regions of the display module 13 on which the display driver 23 and the traces are mounted are inactive in that they do not enable information to be displayed or enable a user to make a user input. Similarly the controllers and circuitry used to control the touch screen 21 also create inactive regions.

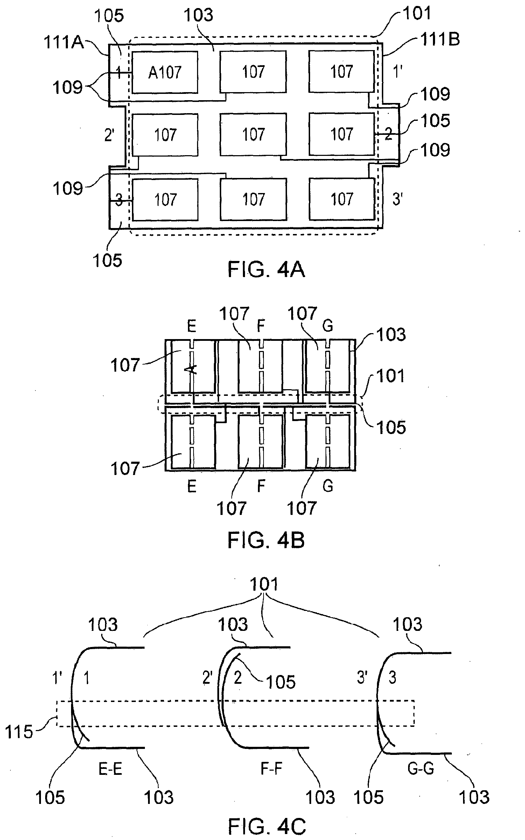

Figs. 4A to 4C schematically illustrate an apparatus 101 according to an example of the disclosure. Fig. 4A illustrates a plan view of the apparatus 101 in a flat configuration. Fig. 4B illustrates the apparatus 101 in a folded configuration. The apparatus 101 may be folded around an electronic device 10 such as the electronic device 10 of Fig. 1. Fig 4C illustrates cross sections of the apparatus 101 through the lines E-E, F-F and G-G.

The apparatus 101 comprises an active region 103 and at least one inactive region 105. The active region 103 comprises a user interface portion 107 which may enable a user to interact with an electronic device 10. In the example of Figs. 4A to 4C a plurality of user interface portions 107 are provided.

The user interface portion 107 may comprise a display panel 19 as described above. The display panel 19 may comprise a plurality of pixels 55. One or more conductive traces 109 may be provided to each of the pixels 55 to enable a display driver 23 to control the information which is displayed on the display panel 19.

In some examples the user interface portions 107 may comprise at least one portion which is configured to be actuated by a user. The portions which are configured to be actuated by a user may comprise portions which enable a user to input information into the electronic device 10 or control the electronic device 10. In some examples the portions which are configured to be actuated by a user may comprise a touch screen 21 as described above.

In the example of Figs. 4A to 4C the active region 103 is provided in the centre of the apparatus 101. A plurality of inactive regions 105 are also provided. The dashed line in Fig. 4A indicates the active region 103. The inactive portions 105 are provided outside of the boundary indicated by the dashed line.

The active region 103 may be configured so that a first edge of the active region 103 can be positioned adjacent to a second edge of the active region 103 for example the active region 103 may be flexible enough to be folded around an electronic device 10. In some examples the active region 103 may be configured so that an edge of the active region 103 can be positioned adjacent an edge of an active region 103 of another apparatus 101. In such examples the apparatus 101 may be configured to fit next to the other apparatus 101. The plurality of apparatus 101 may extend around an electronic device 10.

The inactive regions 105 may comprise regions of the apparatus 101 which are not configured to directly enable a user to interact with an electronic device 10. For example, the inactive region 105 does not comprise a display panel 19 or a touch screen 21 component. The inactive regions 105 may comprise the conductive traces 109 which may be configured to connect the user interface portions 107 to electronic components. In some examples the inactive regions 105 may comprise one or more electronic components such as the display driver 23 or touch screen controller 25. The conductive traces 109 in the inactive regions may be arranged to extend parallel with each other.

The plurality of inactive regions 105 may be provided at the edges 111 of the apparatus 101. The inactive regions 105 may be provided at the edges 111 of the active region 103. The inactive regions 105 may be provided on projections 113 at the edges 111 of the active region 103. The projections 113 may be a region which protrudes out from an edge 111 of the active region 103.

The projections 113 and the active region 103 may be configured so that the active region 103 may extend over at least one projection 113. The active region 103 may be configured to cover at least one projection 113. In some examples the projections 113 may be configured to be entirely covered by the active region 103. In some examples the projections 113 may be configured to be positioned underneath an active region 103. The projections 113 may be configured to be positioned underneath an active region 103 when the apparatus 101 is assembled around an electronic device 10.

In the example of Fig. 4A two projections 113 are provided on the left hand edge 111A of the active region 103 and one projection 113 is provided on the right hand edge 111B of the active region 103. The projections 113 on the left hand edge 111A are arranged so that the two projections 113 are spaced from each other. There is a gap between the two projections 113. The projection 105 on the right hand edge 111B is arranged towards the centre of the right hand edge 111B. The projection 105 of the right hand edge 111B may be parallel or substantially parallel with the gap on the left hand edge 111A. There may be a gap provided either side of the projection on the right hand edge 111B. The gaps may be parallel or substantially parallel with the projections 113 on the left hand edge 111A. The arrangement of the gaps and projections 113 may enable the projections 113 to be positioned so that the active regions 103 extend over the projections 113. The arrangement of the gaps and projections 113 may enable the active region 103 to cover or partially cover one or more of the projections 113.

In the example of Fig. 4A each of the projections 113 extend along a portion of an edge 111 of the active region 103. None of the projections 113, in the example, extend along the whole of an edge 111 of the active region 103. Each of the edges 111 of the active region has a non-projected portion or gap.

The apparatus 101 is illustrated in Fig. 4A in a flat configuration. In some examples the apparatus 101 may be flexible so that the apparatus 101 may be configured in an arrangement as illustrated in Fig. 4B. The apparatus 101 may be flexible so that the apparatus 101 may be folded around an engine of an electronic device 10. This may enable the apparatus 101 to form a user interface portion which extends over more than one surface of the electronic device 10. For example, the apparatus 101 may extend over the front surface, the rear surface and one or more sides of the electronic device 10. This may enable the electronic device 10 to detect a user touching any part of the surface of the electronic device 10 or may enable the electronic device 10 to control information displayed on any part of the electronic device 10. It is to be appreciated that in some examples a plurality of apparatuses may be arranged around the electronic device 10.

Fig. 4B illustrates an example of an apparatus 101 which has been folded so that the left hand edge 111A and the right hand edge 111B touch each other. In the particular example of Fig. 4B the apparatus 101 has been folded back on itself to form a loop. In other examples a plurality of apparatus 101 may be linked together to form a loop which may extend around an electronic device 10.

In the example of Fig. 4B the inactive portions 105 have been folded over so that they are positioned underneath the active regions 103 inside the apparatus 101. In the example of Fig. 4B the active region 103 may extend over the projections 113 so that the projections are covered by the active region 103. In the particular example of Fig. 4B a small portion of the inactive region 105 is not covered by the active region 103. This portion is indicated by the dashed line in Fig. 4B.

Fig. 4C illustrates a cross section through the lines E-E, F-F and G-G. When the apparatus 101 is folded into position the apparatus 101 may be glued in place. The glue may be applied on the region where the projection 113 is folded inside the apparatus 101 as indicated by the dashed line 115. It can be seen in the cross sections of Fig. 4C that an active region 103 may be provided on more than one surface or an electronic device 10. In the example of Fig. 4C the active region 103 is provided on the upper surface and the lower surface as well as the side of the electronic device 10. It can also be seen in Fig. 4C that the inactive region 105 is covered by the active region 103.

The apparatus 101 of Figs. 4A to 4C may be configured to form the housing or part of the housing for an electronic device 10. The active regions 103 of the apparatus 101 may form part of the housing. In some examples the active regions 103 of the apparatus 101 may form part of the surface of the housing so that a user can touch the active regions 103 of the apparatus 101.

The inactive regions 105 are configured on the projections 113 so that they can be folded underneath the active region 103 inside of the apparatus 101 as illustrated in Fig. 4C. The active region 103 may extend over the inactive region 105 so that the inactive region 105 is covered by the active region 103. As the inactive regions 105 are provided on the inside of the apparatus 101 this reduces the amount of the casing of the electronic device 10 which is not active. This reduces the amount of the casing of the electronic device 10 which cannot be used to enable a user to directly interact with the electronic device 10.

As the projections 113 only extend along a portion of an edge this may make them easier to fold inside the apparatus 101. The traces 109 may be arranged in a way which makes the inactive regions 105 easier to bend. For example the traces 109 may be arranged parallel to each other.

As the conductive traces 109 and other electronic components are provided on the inactive regions 105 which are located inside the apparatus 101 this may provide more protection for the traces 109 and components on the inactive regions 105.

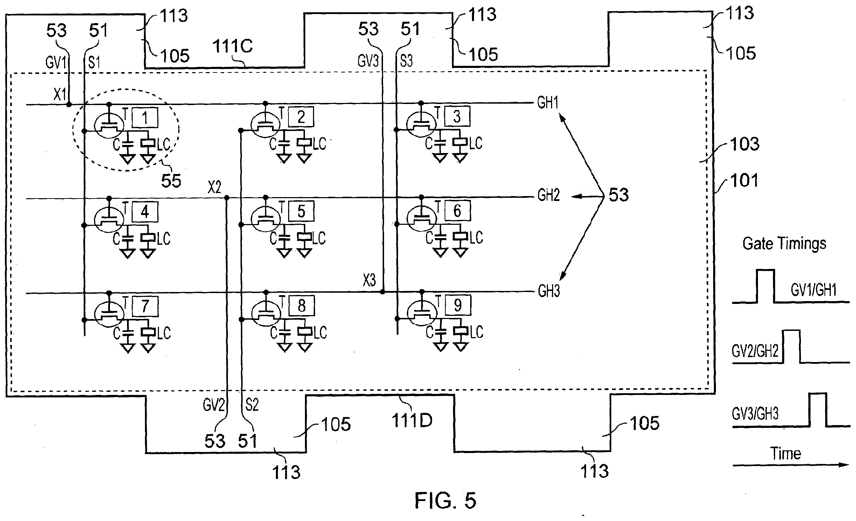

Fig. 5 illustrates another apparatus 101 according to an embodiment of the disclosure. The apparatus 101 comprises an active region 103 and a plurality of inactive regions 105 similar to those described above in relation to Figs. 4A to 4C. The dashed line indicates the active region 103 and the inactive regions 105.

Fig. 5 illustrates pixels 55 of the active region 103 in more detail. The pixels 55 may be configured as described above in relation to Figs. 1 to 3. The conductive traces 109 may comprise a plurality of source lines 51 and a plurality of gate lines 53 which may be configured as described above in relation to Fig.3.

The plurality of inactive regions 105 are provided along two opposing edges of the active region 103. In the example of Fig. 5 the inactive regions are provided outside of the dashed line. The inactive regions 105 are provided on projections along the two opposing edges 111. In the example of Fig. 5 three projections 113 are provided along a first edge 111C. The projections 113 are spaced from each other so that there is a gap provided between each of the projections 113. The second edge 111D is provided opposite the first edge 111C. On the second edge 111D two projections 113 are provided. These projections 113 are also spaced from each other. The projections 113 on the second edge 111D are also arranged so that there is a gap between the respective projections 113. The projections 113 and gaps are arranged so that a projection 113 on one edge is parallel to a gap on the opposing edge. The projections 113 and gaps may be arranged to enable the inactive regions 105 to be positioned underneath active regions 103. The projections 113 and gaps may be arranged so that the active region can extend over and cover at least a portion of the projections 113.

As with the previously described examples the inactive regions 105 do not comprise any user interface portions but may comprise the conductive traces and controllers or drivers for controlling the active region 103. In the example of Fig. 5 the source lines 51 and gate lines 53 may be provided on the inactive regions. The source lines 51 and gate lines 53 may be configured in any suitable arrangement in the active regions 103. For example the source lines 51 may be configured to extend perpendicularly to the gate lines 53. However the source lines 51 and gate line 53 may be arranged parallel to each other on the inactive regions 105. This may make it easier to bend the inactive regions 105.

The apparatus 101 of Fig. 5 may be folded to extend over one or more surfaces of an electronic device 10 as described above in relation to Fig. 2. In some examples the apparatus 101 may be configured to extend entirely around an electronic device 10 so that the first edge 111C comes into contact with the second edge 111D of the same apparatus 101. In other examples two or more apparatus 101 may be arranged to extend around an electronic device 10 so that a first edge 111C of a first apparatus 101 is positioned near to or comes into contact with a second edge 111D of a second apparatus 101. It is to be appreciated that any number of apparatus 101 may be provided on the casing of an electronic device 10.

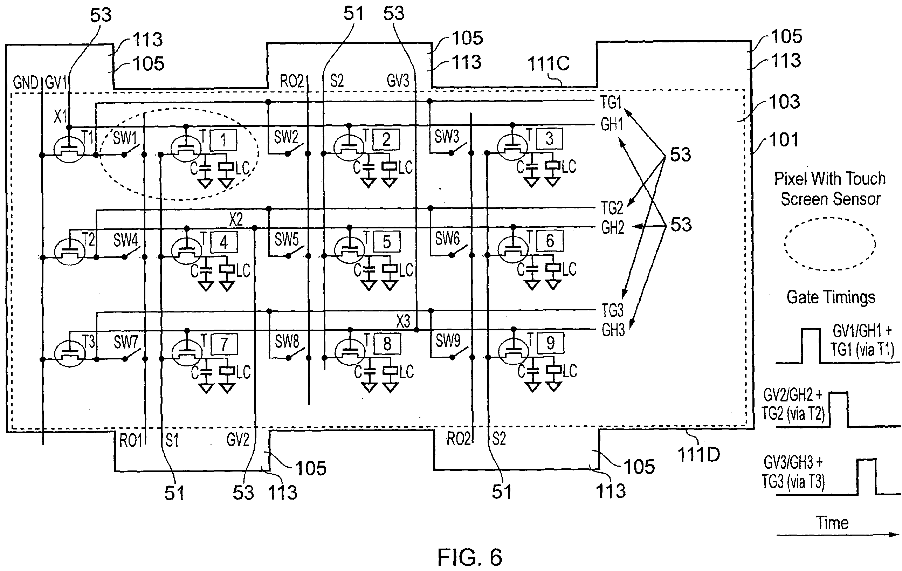

Fig. 6 illustrates another apparatus 101 according to an embodiment of the disclosure. The example apparatus 101 of Fig. 6 also comprises an active region 103 and a plurality of inactive regions 105 similar to those described above in relation to Figs. 4A to 4C and Fig. 5.

In the example of Fig. 6 the active region 103 comprises a display panel 19 integrated with a touch screen sensor 21. The active region 103 comprises a plurality of pixels 55 as described above in relation to Figs. 1 to 3 integrated with a touch screen sensor. The conductive traces 109 may also comprise a plurality of source lines 51 and a plurality of gate lines 53.

The source lines 51 and gate lines 53 may be configured in any suitable arrangement in the active regions 103. For example the source lines 51 may be configured to extend perpendicularly to the gate lines 53. However the source lines 51 and gate lines 53 may be arranged parallel to each other on the inactive regions 105.

The plurality of inactive regions 105 are provided along two opposing edges of the active region 103 as described above in relation to Fig. 5. It is to be appreciated that other arrangements of the inactive regions 105 may be provided in other examples.

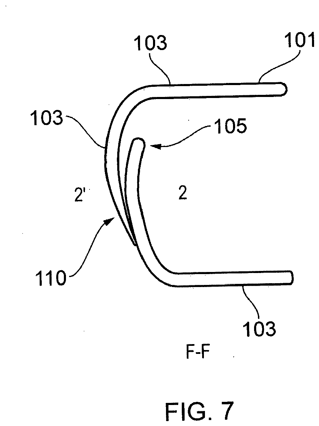

Fig. 7 illustrates a cross section through a portion of an apparatus 101 along the line F-F similar to those of Fig. 4C. In the example of Fig. 7 the apparatus 101 comprises a tapered portion 110. The tapered portion 110 decreases in thickness towards the edge 111 so that the apparatus 101 is thicker in the middle than at the edge 111. This creates a smooth surface when the apparatus 101 is assembled around an electronic device 10. This makes the edges 111 of the apparatus 101 less noticeable.

In the example of Fig. 7 the thickness of the apparatus is not tapered in the inactive regions 105. As the active region 103 covers the inactive region 105 the apparatus 101 the user cannot see or touch the inactive region 105 once the apparatus 101 is assembled.

The term 'comprise' is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this detailed description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A flexible apparatus (101) foldable into a loop, the apparatus comprising:
an active region (103) comprising a plurality of user interface portions (107), wherein the plurality of user interface portions comprise at least one of: a plurality of display portions and at least one portion which is configured to be actuated by a user;
at least one inactive region (105) comprising a plurality of traces (109) configured to connect the user interface portions to electronic components;
at least two first projections (113) extending from a first edge (111A, 111C) of the active region and at least one second projection (113) extending from a second edge (111B, 111D) of the active region,
wherein the at least two first projections of the apparatus are positioned to define a first gap, and wherein second gaps are provided on either side of the at least one second projection,
wherein the arrangement of the first gap and the at least one second projection enable the at least one second projection to be positioned so that the active region extends over the at least one second projection when the first edge of the active region is positioned adjacent to the second edge of the active region,
wherein the arrangement of the second gaps and the at least two first projections enable the at least two first projections to be positioned so that the active region extends over the at least two first projections when the first edge of the active region is positioned adjacent to the second edge of the active region, and
wherein the at least one inactive region is provided on at least one of the first and second projections.

2. An apparatus (101) as claimed in any preceding claim wherein the active region (103) is configured so that an edge (111) of the active region can be positioned adjacent to an edge (111) of an active region (103) of another apparatus (101).

3. An apparatus (101) as claimed in any preceding claim wherein the plurality of display portions are pixels in a display panel (19).

4. An apparatus (101) as claimed in any preceding claim wherein the portion which is configured to be actuated by a user comprises a touch sensitive portion.

5. An apparatus (101) as claimed in any preceding claim wherein the active region (103) is configured to form at least a portion of the outer surface of a casing of an electronic device (10).

6. An apparatus (101) as claimed in any preceding claim wherein the inactive region (105) is configured to be positioned inside the casing of an electronic device (10).

7. An apparatus (101) as claimed in any preceding claim wherein the thickness of the apparatus is reduced close to an edge (111) of the apparatus.

8. An apparatus (101) as claimed in any preceding claim wherein the at least one inactive region (105) comprises controllers or drivers for controlling the active region (103).

9. An apparatus as claimed in any preceding claim wherein the plurality of traces are arranged parallel to each other.

10. An electronic device (10) comprising the apparatus (101) as claimed in any preceding claim, wherein the apparatus forms at least part of a housing for the electronic device.

11. An electronic device (10) as claimed in claim 10 wherein the user interface portions (107) comprise portions which enable a user to input information into the electronic device or control the electronic device.

## Patentansprüche

1. Flexibler Apparatus (101), der in eine Schleife gefaltet werden kann, der Apparatus umfassend:
eine aktive Region (103), die mehrere Benutzerschnittstellenteile (107) umfasst, wobei die mehreren Benutzerschnittstellenteile mindestens eines der folgenden umfassen: mehrere Anzeigeteile und mindestens einen Teil, der konfiguriert ist, um durch einen Benutzer betätigt zu werden;
mindestens eine inaktive Region (105), die mehrere Spuren (109) umfasst, die konfiguriert sind, die Benutzerschnittstellenteile mit elektronischen Bauteilen zu verbinden;
mindestens zwei erste Vorsprünge (113), die sich von einer ersten Kante (111A, 111C) der aktiven Region erstrecken, und mindestens ein zweiter Vorsprung (113), der sich von einer zweiten Kante (111B, 111D) der aktiven Region erstreckt,
wobei die mindestens zwei ersten Vorsprünge des Apparatus positioniert sind, um eine erste Lücke zu definieren, und wobei zweite Lücken an jeder Seite des mindestens einen zweiten Vorsprungs bereitgestellt sind,
wobei die Anordnung der ersten Lücke und des mindestens einen zweiten Vorsprungs den mindestens einen zweiten Vorsprung so platzierbar machen, dass sich die aktive Region über den mindestens einen zweiten Vorsprung erstreckt, wenn die erste Kante der aktiven Region neben der zweiten Kante der aktiven Region platziert ist,
wobei die Anordnung der zweiten Lücken und der mindestens zwei ersten Vorsprünge die mindestens zwei ersten Vorsprünge so platzierbar macht, dass sich die aktive Region über die mindestens einen zweiten Vorsprung erstreckt, wenn die erste Kante der aktiven Region neben der zweiten Kante der aktiven Region platziert wird, und
wobei die mindestens eine inaktive Region an mindestens einem der ersten und zweiten Vorsprünge bereitgestellt wird.

2. Apparatus (101) nach einem der vorhergehenden Ansprüche, wobei die aktive Region (103) so konfiguriert ist, dass eine Kante (111) der aktiven Region neben einer Kante (111) einer aktiven Region (103) eines anderen Apparatus (101) platziert werden kann.

3. Apparatus (101) nach einem der vorhergehenden Ansprüche, wobei die mehreren Anzeigeteile Pixel in einer Anzeigetafel sind (19).

4. Apparatus (101) nach einem der vorhergehenden Ansprüche, wobei der Teil, der konfiguriert ist, durch einen Benutzer betätigt zu werden, einen berührungsempfindlichen Teil umfasst.

5. Apparatus (101) nach einem der vorhergehenden Ansprüche, wobei die aktive Region (103) konfiguriert ist, mindestens einen Teil der äußeren Fläche eines Gehäuses eines elektronischen Apparatus (10) zu bilden.

6. Apparatus (101) nach einem der vorhergehenden Ansprüche, wobei die inaktive Region (105) konfiguriert ist, in dem Gehäuse eines elektronischen Apparatus (10) platziert zu werden.

7. Apparatus (101) nach einem der vorhergehenden Ansprüche, wobei die Dicke des Apparatus in der Nähe einer Kante (111) des Apparatus verringert wird.

8. Apparatus (101) nach einem der vorhergehenden Ansprüche, wobei die mindestens eine inaktive Region (105) Controller oder Treiber zum Steuern der aktiven Region (103) umfasst.

9. Apparatus nach einem der vorhergehenden Ansprüche, wobei die mehreren Spuren parallel zueinander angeordnet sind.

10. Elektronischer Apparatus (10), umfassend den Apparatus (101) nach einem der vorhergehenden Ansprüche, wobei der Apparatus mindestens einen Teil eines Gehäuses für den elektrischen Apparatus bildet.

11. Elektronischer Apparatus (10) nach Anspruch 10, wobei die Benutzerschnittstellenteile (107) Teile umfassen, die es einem Benutzer ermöglichen, Informationen in den elektronischen Apparatus einzugeben oder den elektronischen Apparatus zu steuern.

## Revendications

1. Appareil flexible (101) qui peut être plié en une boucle, l'appareil comprenant :
une région active (103) comprenant une pluralité de parties d'interface utilisateur (107), dans lequel la pluralité de parties d'interface utilisateur comprennent : une pluralité de parties d'affichage et/ou au moins une partie qui est configurée pour être actionnée par l'utilisateur ;
au moins une région inactive (105) comprenant une pluralité de traces (109) configurées pour connecter les parties d'interface utilisateur à des composants électroniques ;
au moins deux premières saillies (113) s'étendant depuis un premier bord (111A, 111C) de la région active et au moins une seconde saillie (113) s'étendant depuis un second bord (111B, 111D) de la région active,
dans lequel les deux, ou plus, premières saillies de l'appareil sont positionnées pour définir un premier espace et dans lequel des seconds espaces sont prévus sur l'un ou l'autre côté de la ou des secondes saillies,
dans lequel l'agencement du premier espace et la ou les secondes saillies permettent à la ou aux secondes saillies d'être positionnées de telle sorte que la région active s'étende sur la ou les secondes saillies lorsque le premier bord de la région active est positionné de façon adjacente au second bord de la région active,
dans lequel l'agencement des seconds espaces et la ou les premières saillies permettent à la ou aux premières saillies d'être positionnées de telle sorte que la région active s'étende sur la ou les premières saillies lorsque le premier bord de la région active est positionné de façon adjacente au second bord de la région active, et
dans lequel la ou les régions inactives sont disposées sur au moins l'une des premières et seconde saillies.

2. Appareil (101) selon l'une quelconque des revendications précédentes, dans lequel la région active (103) est configurée de telle sorte qu'un bord (111) de la région active puisse être positionné de façon adjacente à un bord (111) de la région active (103) d'un autre appareil (101).

3. Appareil (101) selon l'une quelconque des revendications précédentes, dans lequel la pluralité de parties d'affichage sont des pixels dans un panneau d'affichage (19).

4. Appareil (101) selon l'une quelconque des revendications précédentes, dans lequel la partie qui est configurée pour être actionnée par un utilisateur, comprend une partie tactile.

5. Appareil (101) selon l'une quelconque des revendications précédentes, dans lequel la région active (103) est configurée pour former au moins une partie de la surface externe d'un boîtier d'un dispositif électronique (10).

6. Appareil (101) selon l'une quelconque des revendications précédentes, dans lequel la région inactive (105) est configurée pour être positionnée à l'intérieur du boîtier d'un dispositif électronique (10).

7. Appareil (101) selon l'une quelconque des revendications précédentes, dans lequel l'épaisseur de l'appareil est réduite à proximité d'un bord (111) de l'appareil.

8. Appareil (101) selon l'une quelconque des revendications précédentes, dans lequel la ou les régions inactives (105) comprennent des dispositifs de commande ou des pilotes pour commander la région active (103).

9. Appareil selon l'une quelconque des revendications précédentes, dans lequel la pluralité de traces sont disposées de façon parallèle les unes par rapport aux autres.

10. Dispositif électronique (10) comprenant l'appareil (101) selon l'une quelconque des revendications précédentes, dans lequel l'appareil forme au moins une partie d'un logement pour le dispositif électronique.

11. Dispositif électronique (10) selon la revendication 10, dans lequel les parties d'interface utilisateur (107) comprennent des parties qui permettent à un utilisateur d'entrer des informations dans le dispositif électronique ou de commander le dispositif électronique.
